(19)

Europäisches Patentamt
European Patent Office
Office européen des brevets

(11) **EP 4 502 621 A1**

(12) **EUROPEAN PATENT APPLICATION**
published in accordance with Art. 153(4) EPC

(43) Date of publication:
**05.02.2025 Bulletin 2025/06**

(21) Application number: **23779903.6**

(22) Date of filing: **22.03.2023**

(51) International Patent Classification (IPC):
***G01P 13/00*** (2006.01)        ***G01B 15/02*** (2006.01)

(52) Cooperative Patent Classification (CPC):
**G01B 15/02; G01P 3/481; G01P 13/00**

(86) International application number:
**PCT/JP2023/011098**

(87) International publication number:
**WO 2023/189889 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022057256**

(71) Applicant: **Yokogawa Electric Corporation
Tokyo 180-8750 (JP)**

(72) Inventors:
• **YOSHIDA, Naoki
  Musashino-shi, Tokyo 180-8750 (JP)**
• **AKUTSU, Minoru
  Musashino-shi, Tokyo 180-8750 (JP)**

(74) Representative: **Winter, Brandl - Partnerschaft
mbB
Alois-Steinecker-Straße 22
85354 Freising (DE)**

(54) **MEASUREMENT SYSTEM AND MEASUREMENT METHOD**

(57) A measurement system includes a plurality of frames each of which scans and measures a sheet being conveyed, and a synchronization control unit which synchronously controls each of the frames. The synchronization control unit includes a speed calculator which calculates a speed of the sheet in each of the frames, and a controller which controls each of the frames so that each of the frames scans and measures the same position of the sheet on the basis of a calculated speed of the sheet in each of the frames calculated by the speed calculator.

FIG.1

EP 4 502 621 A1

## Description

Field

The present invention relates to a measurement system and a measurement method.

Background

It is known to synchronously control a plurality of frames for scanning and measuring a sheet being conveyed (see, for example, Patent Literature 1).

Citation List

Patent Literature

Patent Literature 1: JP 7-204565 A

Summary

Technical Problem

For example, there is a case where the sheet extends at the time of conveyance, and the speed of the sheet differs depending on the frame. If this point is not taken into consideration, the synchronization is lost, and the accuracy of the synchronization control is lowered.

One aspect of the present invention makes it possible to reduce lowering of accuracy of synchronization control for a plurality of frames.

Solution to Problem

According to one aspect, a measurement system includes a plurality of frames each of which scans and measures a sheet being conveyed, and a synchronization control unit which synchronously controls each of the frames, wherein the synchronization control unit includes a speed calculator which calculates a speed of the sheet in each of the frames, and a controller which controls each of the frames so that each of the frames scans and measures an equal position of the sheet on a basis of a calculated speed of the sheet in each of the frames calculated by the speed calculator.

According to one aspect, a measurement method using a plurality of frames each of which scans and measures a sheet being conveyed, the measurement method includes calculating a speed of the sheet in each of the frames, and controlling each of the frames so that each of the frames scans and measures an equal position of the sheet on a basis of a calculated speed of the sheet in each of the frames calculated.

Advantageous Effects of Invention

According to the present invention, it is possible to reduce lowering of accuracy of synchronization control for a plurality of frames.

Brief Description of Drawings

FIG. 1 is a diagram illustrating an example of a schematic configuration of a measurement system according to a first embodiment.
FIG. 2 is a diagram illustrating an example of a schematic configuration of a frame.
FIG. 3 is a flowchart illustrating an example of processing (measurement method) executed in the measurement system.
FIG. 4 is a diagram illustrating an example of functional blocks of a synchronization control unit used in a measurement system according to a second embodiment.
FIG. 5 is a graph illustrating an example of detection of an abnormal difference.
FIG. 6 is a flowchart illustrating an example of processing (measurement method) executed in the measurement system.

Description of Embodiments

Hereinbelow, embodiments will be described with reference to the drawings. The same elements are denoted by the same reference signs, and redundant description will be omitted as appropriate.

<First Embodiment>

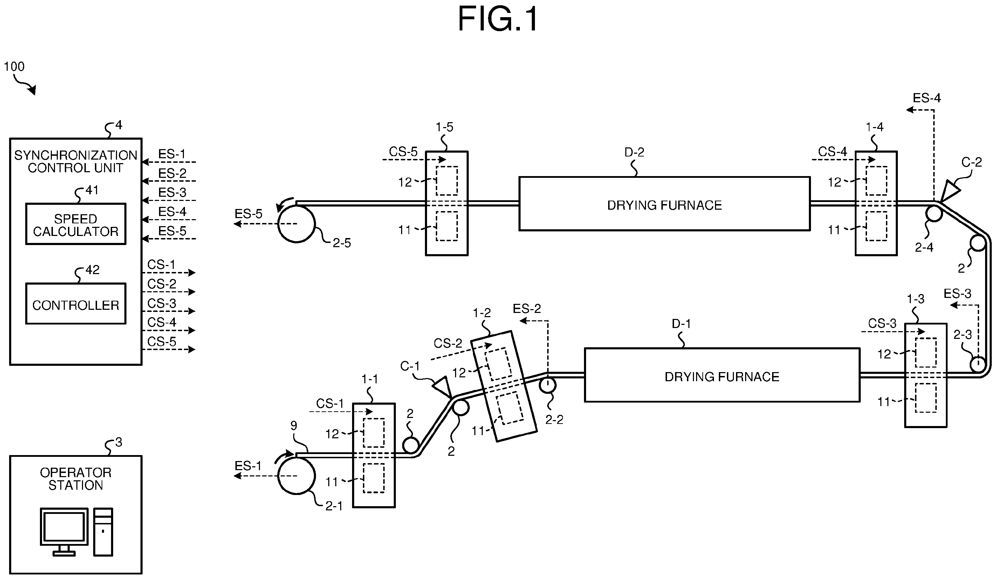

FIG. 1 is a diagram illustrating an example of a schematic configuration of a measurement system according to a first embodiment. A measurement system 100 measures a sheet 9 being conveyed. Examples of the sheet 9 include paper, resin, and a battery electrode sheet. For example, the sheet 9 during the manufacturing process is measured by the measurement system 100. Examples of a process included in the production process are a coating process and a drying process. The measurement system 100 includes a plurality of frames 1, a plurality of rollers 2, an operator station 3 and a synchronization control unit 4.

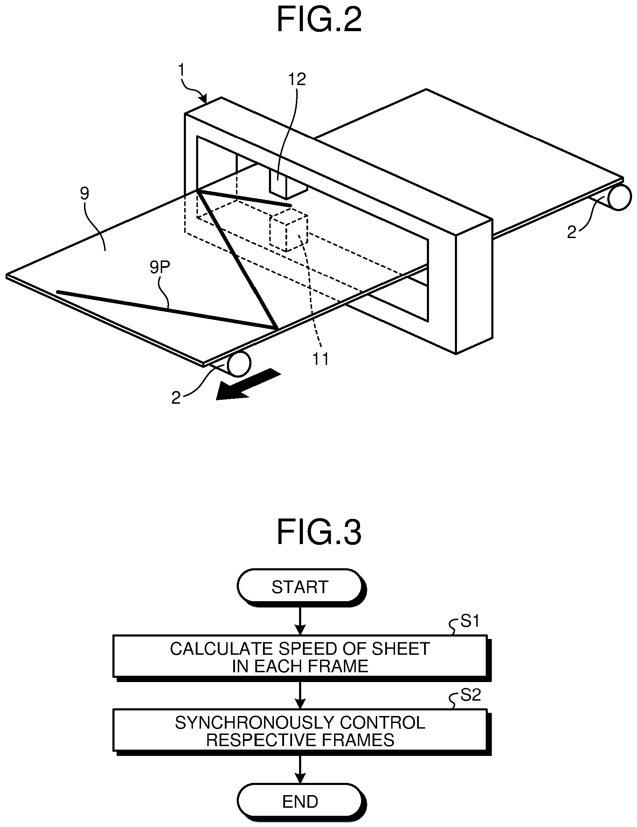

Each of the plurality of frames 1 is disposed such that the sheet 9 passes through the inside of the frame, and scans and measures the sheet 9 being conveyed. A sensor head is used for the measurement. In this example, the frame 1 includes a sensor head 11 and a sensor head 12. Description will be given with reference to FIG. 2 as well.

FIG. 2 is a diagram illustrating an example of a schematic configuration of the frame. The frame 1 has a ring shape through which the sheet 9 can pass. Such a frame 1 is also referred to as an O-shaped frame or the like. The sensor head 11 and the sensor head 12 are attached to the frame 1 and supported.

The sensor head 11 and the sensor head 12 scan the sheet 9 by moving in the frame 1 in a direction intersecting with (for example, a direction orthogonal to) the conveying direction of the sheet 9. The scanned position on the sheet 9 is referred to as a scanned position 9P, and is schematically illustrated. The sensor head 11 and the sensor head 12 are arranged so as to be located on opposite sides with the sheet 9 interposed therebetween, and move together so as to scan the entire width of the sheet 9 while repeating forward movement and backward movement in a state where the positional relationship is fixed. For example, the sensor head 11 and the sensor head 12 are driven by, for example, a not-illustrated actuator.

For example, a radiation source such as $\beta$ rays and X-rays is provided in the sensor head 11. A radiation detector that detects radiation from the sensor head 11 is mounted on the sensor head 12. Radiation from the sensor head 11 is transmitted through the sheet 9 and is detected by the sensor head 12. By doing so, the transmission amount and the attenuation amount (which may be the transmittance and the attenuation rate) of the radiation transmitted through the sheet 9 are detected. For example, the thickness of the sheet 9 is calculated on the basis of a calibration curve indicating a relationship between the transmittance or the like of the sheet 9 and the thickness of the sheet 9. The thickness of the sheet 9 can be measured.

Returning to FIG. 1, as the plurality of frames 1, a frame 1-1 to a frame 1-5 are exemplified. The sheet 9 is conveyed so as to pass through the frame 1-1 to the frame 1-5 in this order. For example, the thickness of the sheet 9 in a state before coating is measured by the frame 1-1. A coater C-1 applies a coating material to the front surface of the sheet 9. The frame 1-2 measures the thickness of the sheet 9 in a state where the coating material is applied to the front surface. Thereafter, the sheet 9 passes through a drying furnace D-1. The frame 1-3 measures the thickness of the sheet 9 in a dried state. A coater C-2 applies a coating material to the rear surface of the sheet 9. The frame 1-4 measures the thickness of the sheet 9 in a state where the coating material is applied to the rear surface. Thereafter, the sheet 9 passes through a drying furnace D-2. The frame 1-5 measures the thickness of the sheet 9 in a dried state.

The distance between the frames 1 in the conveying direction of the sheet 9 is referred to as a path length L. Examples of the path length L include a path length $L_{12}$ between the frame 1-1 and the frame 1-2, a path length $L_{23}$ between the frame 1-2 and the frame 1-3, a path length $L_{34}$ between the frame 1-3 and the frame 1-4, and a path length $L_{45}$ between the frame 1-4 and the frame 1-5.

The roller 2 is one of the components of a conveying device for the sheet 9. An example of the conveying device includes a conveyor. The roller 2 rotates in accordance with the movement of the sheet 9 conveyed. The rollers 2, out of the plurality of rollers 2, located near the frame 1-1 to the frame 1-5 are referred to as a roller 2-1 to a roller 2-5, respectively, and are illustrated in the figure.

The rotation of at least some of the plurality of rollers 2 is detected by an encoder. The signal indicating the detection result is referred to as an encoder signal ES. The encoder signal ES is transmitted from the encoder of the roller 2 to the synchronization control unit 4. In the example illustrated in FIG. 1, the rotation of at least the roller 2-1 to the roller 2-5 is detected by the encoder. The encoder signals ES of the roller 2-1 to the roller 2-5 are referred to as an encoder signal ES-1 to an encoder signal ES-5, respectively, and are illustrated in the figure.

The operator station 3 acquires a measurement result in each frame 1, specifically, data of the thickness of the sheet 9. The measurement result is displayed to the operator by, for example, a monitor. A necessary operation is performed according to the measurement result. For example, parameters of the coater C-1, the coater C-2, the drying furnace D-1, the drying furnace D-2, and the like are adjusted so that the thickness of the sheet 9 becomes a target thickness.

The synchronization control unit 4 synchronously controls the respective frames 1. The functional blocks of the synchronization control unit 4 are also illustrated in FIG. 1. In this example, the synchronization control unit 4 includes a speed calculator 41 and a controller 42.

The speed calculator 41 calculates the speed of the sheet 9 in each frame 1. In the example illustrated in FIG. 1, the speed calculator 41 calculates the speed of the sheet 9 in each frame 1 on the basis of the encoder signal ES from the roller 2 near the frame 1. For example, on the basis of the rotating speed of the roller 2 grasped from the encoder signal ES, the speed of the sheet 9 in the corresponding frame 1 is calculated. In the example illustrated in FIG. 1, on the basis of the encoder signal ES-1 to the encoder signal ES-5, the speeds of the sheet 9 in the frame 1-1 to the frame 1-5 are calculated. Hereinbelow, the speed of the sheet 9 calculated by the speed calculator 41 is also referred to as a calculated speed V.

Here, the calculated speeds V in the respective frames 1 may be different from each other. One of the factors is the extension of the sheet 9 being conveyed. Depending on the material or the like of the sheet 9, the sheet 9 extends at the time of conveyance. As described below, in the present embodiment, even in a case where the calculated speeds V in the respective frames 1 are different due to the extension or the like of the sheet 9, the frames 1 are appropriately synchronously controlled.

The controller 42 controls each frame 1 so that the frame 1 scans and measures the same position of the sheet 9 on the basis of the calculated speed V of the sheet 9 in the frame 1. In other words, the scanning timing of each frame 1, that is, the driving timings of the sensor head 11 and the sensor head 12 are controlled so that the scanned position 9P of the sheet 9 in each frame 1 becomes the same.

Of the plurality of frames 1, two frames 1 arranged in order in the conveying direction of the sheet 9 will be described as examples. On the basis of the path length L between the former frame 1 and the latter frame 1 out of the two frames 1, the calculated speed V in the former frame 1, and the calculated speed V in the latter frame 1, the controller 42 calculates delay time T of scanning of the latter frame 1 with respect to scanning of the former frame 1.

For example, the controller 42 calculates the delay time T by dividing the path length L between the former frame 1 and the latter frame 1 by the average speed of the calculated speed V of the sheet 9 in the former frame 1 and the calculated speed V of the sheet 9 in the latter frame 1.

Specifically, description will be provided using the frame 1-1 and the frame 1-2 as examples of the former frame 1 and the latter frame 1. The calculated speed V of the sheet 9 in the frame 1-1 is defined as a calculated speed $V_1$. The calculated speed V of the sheet 9 in the frame 1-2 is defined as a calculated speed $V_2$. The path length L between the frame 1-1 and the frame 1-2 is defined as the path length $L_{12}$ as described above. The delay time T of scanning of the frame 1-2 with respect to scanning of the frame 1-1 is defined as delay time $T_{12}$. In this case, the controller 42 calculates the delay time $T_{12}$ on the basis of Equation (1) described below, for example.

$$T_{12} = L_{12} / ((V_1 + V_2) / 2) \tag{1}$$

Similarly, for example, delay time $T_{23}$ of scanning of the frame 1-3 with respect to scanning of the frame 1-2 is calculated. Delay time $T_{34}$ of scanning of the frame 1-4 with respect to scanning of the frame 1-3 is calculated. Delay time $T_{45}$ of scanning of the frame 1-5 with respect to scanning of the frame 1-4 is calculated.

The controller 42 controls the scanning timing of the latter frame 1 on the basis of the calculated delay time T. The controller 42 controls the scanning timing of the latter frame 1 so that the scanning of the latter frame 1 is delayed by the delay time T further than the scanning of the former frame 1. For example, the scanning timing of the frame 1-2 is controlled so that the scanning timing of the frame 1-2 is delayed by the delay time $T_{12}$ further than the scanning timing of the frame 1-1. The scanning timing of the frame 1-3 is controlled so that the scanning timing of the frame 1-3 is delayed by the delay time $T_{23}$ further than the scanning timing of the frame 1-2. The scanning timing of the frame 1-4 is controlled so that the scanning timing of the frame 1-4 is delayed by the delay time $T_{34}$ further than the scanning timing of the frame 1-3. The scanning timing of the frame 1-5 is controlled so that the scanning timing of the frame 1-5 is delayed by the delay time $T_{45}$ further than the scanning timing of the frame 1-4.

In the example illustrated in FIG. 1, the controller 42 controls each frame 1 by transmitting a command signal CS to the frame 1. The command signals CS transmitted to the frame 1-1 to the frame 1-5 are referred to as a command signal CS-1 to a command signal CS-5, respectively, and are illustrated in the figure. Each frame 1 drives the sensor head 11 and the sensor head 12 on the basis of the command signal CS from the controller 42 of the synchronization control unit 4. The respective frames 1 each drive the sensor head 11 and the sensor head 12 so that the frames 1 scan and measure the same position of the sheet 9.

According to the measurement system 100 described above, even in a case where the calculated speeds V in the respective frames 1 are different due to, for example, the extension of the sheet 9 being conveyed, the frames 1 are controlled so that the frames 1 scan and measure the same position of the sheet 9 on the basis of the calculated speeds V of the sheet 9 in the frames 1. The thickness of the same scanned position 9P of the sheet 9 can be measured accurately.

FIG. 3 is a flowchart illustrating an example of processing (measurement method) executed in the measurement system. Since the specific processing has been described above, the detailed description will be omitted.

In Step S1, the speed of the sheet in each frame is calculated. The speed calculator 41 of the synchronization control unit 4 calculates the speed of the sheet 9 in each frame 1 on the basis of the encoder signal ES from the roller 2 near the frame 1.

In Step S2, the respective frames are synchronously controlled. The controller 42 of the synchronization control unit 4 controls each frame 1 so that the frame 1 scans and measures the same position of the sheet 9 on the basis of the calculated speed V of the sheet 9 in the frame 1.

<Second Embodiment>

In a case where slippage of the sheet 9 being conveyed occurs, the calculated speed V of the sheet 9 in some frames 1 may be different from the actual speed of the sheet 9. In such a case, a measure according to the second embodiment may be taken.

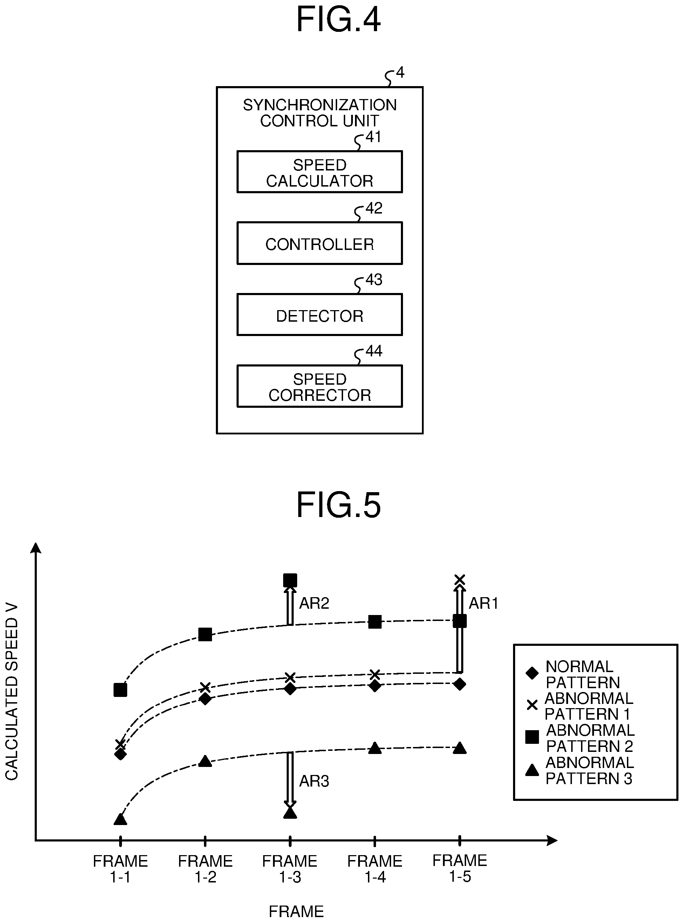

FIG. 4 is a diagram illustrating an example of functional blocks of a synchronization control unit used in a measurement system according to a second embodiment. The synchronization control unit 4 further includes a detector 43 and a speed corrector 44.

The detector 43 detects an abnormal difference between the speeds of the sheet 9 in the frames 1, that is, the calculated speeds V in the frames 1, calculated by the speed calculator 41. Several specific examples of the detection method will be described.

The detector 43 may detect the abnormal difference in a case where the difference between the calculated speeds V in the frames 1 is larger than a threshold value. In this case, the frame 1 having the calculated speed V that is far (for example, farthest) from the calculated speeds V in the other frames 1 may be detected as the frame 1 corresponding to the abnormal difference.

The detector 43 may detect the abnormal difference in a case where the difference of the calculated speed V in the middle frame 1, out of the three frames 1 arranged in order in the conveyance direction of the sheet 9, from the calculated speed V in the former frame 1 and the difference thereof from the calculated speed V in the latter frame 1 are each larger than a threshold value. In this case, the middle frame 1 may be detected as the frame 1 corresponding to the abnormal difference.

FIG. 5 is a graph illustrating an example of detection of the abnormal difference. The horizontal axis of the graph corresponds to the frame 1-1 to the frame 1-5. The vertical axis of the graph indicates the calculated speed V of the sheet 9 in each of the frames 1.

The four kinds of plotted point illustrate four patterns of measurement results. Each of the alternate long and short dash lines virtually indicates the assumed calculated speeds V of the sheet 9 in the respective frames 1. The extension of the sheet 9 is taken into consideration, and the assumed calculated speed V increases in order from the frame 1-1 to the frame 1-5.

The rhombus plotted points illustrate the measurement result of a normal pattern. The calculated speeds V of the sheet 9 in all the frames 1 follow the assumed calculated speeds V. The X plotted points, the square plotted points, and the triangle plotted points indicate the measurement results of abnormal patterns. Each of the patterns indicates an abnormal pattern in which the calculated speed V of the sheet 9 in at least one frame 1 is significantly far from the assumed calculated speed V.

In an abnormal pattern 1, as indicated by an outlined arrow AR1, the difference of the calculated speed V in the frame 1-5 from the calculated speed V in another frame 1 is larger than a threshold value, and the abnormal difference is detected. In addition, the frame 1-5 is detected as the frame 1 corresponding to the abnormal difference.

In an abnormal pattern 2 and an abnormal pattern 3, as indicated by outlined arrows AR2 and AR3, the differences of the calculated speed V of the sheet 9 in the frame 1-3 from the calculated speeds V in the frame 1-2 and the frame 1-4 arranged before and after the frame 1-3 are larger than the threshold value, and the abnormal difference is detected. In addition, the frame 1-3 is detected as the frame 1 corresponding to the abnormal difference.

The abnormal difference detected in the above-described abnormal pattern 1 may occur in a case where slippage of the sheet 9 occurs in the roller 2-5 corresponding to the frame 1-5. The abnormal difference detected in each of the abnormal patterns 2 and 3 may occur in a case where slippage of the sheet 9 occurs in the roller 2-3 corresponding to the frame 1-3. Therefore, it can be said that the detection of the abnormal difference is detection of occurrence of slippage of the sheet 9.

Returning to FIG. 4, the speed corrector 44 corrects the calculated speed V of the sheet 9 in the frame 1 corresponding to the abnormal difference detected by the detector 43 out of the calculated speeds V in the respective frames 1 calculated by the speed calculator 41.

In one embodiment, the speed corrector 44 corrects the calculated speed V of the sheet 9 in the frame 1 corresponding to the abnormal difference on the basis of the calculated speed V in another frame 1. The speed corrector 44 calculates the speed of the sheet 9 in the frame 1 corresponding to the abnormal difference on the basis of the calculated speed V in another frame 1. The speed corrector 44 corrects the calculated speed V of the sheet 9 in the frame 1 corresponding to the abnormal difference so that the speed calculated becomes the calculated speed V of the sheet 9 in the frame 1. It can also be said that the calculated speed V of the sheet 9 in the frame 1 corresponding to the abnormal difference calculated by the speed calculator 41 is calculated again and updated by the speed corrector 44.

The speed corrector 44 may correct the calculated speed V of the sheet 9 in the frame 1 corresponding to the abnormal difference on the basis of the path length L between the frame 1 corresponding to the abnormal difference and another frame 1 and the calculated speed V of the sheet 9 in the other frame 1.

Specifically, description will be provided using the frame 1-1, the frame 1-2, and the frame 1-3 as examples. It is assumed that the frame 1-2 is the frame 1 corresponding to the abnormal difference. The calculated speed V of the sheet 9 in the frame 1-1 is defined as a calculated speed $V_1$. The calculated speed V of the sheet 9 in the frame 1-3 is defined as a calculated speed $V_3$. The path length L between the frame 1-1 and the frame 1-2 is defined as the path length $L_{12}$ as described above. The path length L between the frame 1-2 and the frame 1-3 is defined as the path length $L_{23}$ as described above. In this case, the controller 42 calculates the speed $V_2$ of the sheet 9 in the frame 1-2 on the basis of, for example, Equation (2) described below.

$$V_2 = V_1 + (V_3 - V_1) L_{12} / (L_{12} + L_{23})$$
$$= (V_1 L_{23} + V_3 L_{12}) / (L_{12} + L_{23}) \tag{2}$$

The speed corrector 44 corrects the calculated speed V of the sheet 9 in the frame 1-2 so that the calculated speed V of the sheet 9 in the frame 1-2 becomes the speed $V_2$ calculated as described above.

Note that the speed corrector 44 may correct the calculated speed V of the sheet 9 in the frame 1 corresponding to the abnormal difference on the basis of a representative speed of the entire conveying device instead of the calculated speeds V in the other frames 1. The representative speed may be a speed calculated on the basis of the encoder signal ES from a freely-selected roller 2 out of the plurality of rollers 2. The speed corrector 44 may correct the calculated speed V of the sheet 9 in the frame 1 corresponding to the abnormal difference so that the representative speed becomes the calculated speed V of the sheet 9 in the frame 1.

The controller 42 controls each frame 1 so that the frame 1 scans and measures the same position of the sheet 9 on the basis of the calculated speed V in the frame 1 after being corrected by the speed corrector 44 as necessary. With this configuration, for example, even in a case where slippage of the sheet 9 being conveyed occurs and the calculated speed V of the sheet 9 in a certain frame 1 is different from the actual speed of the sheet 9, the frames 1 are controlled so that the frames 1 scan and measure the same position of the sheet 9 on the basis of the corrected calculated speed V. The thickness of the same scanned position 9P of the sheet 9 can be measured accurately.

Note that the operator or the like may be notified, by the operator station 3, of the abnormal difference detected by the detector 43.

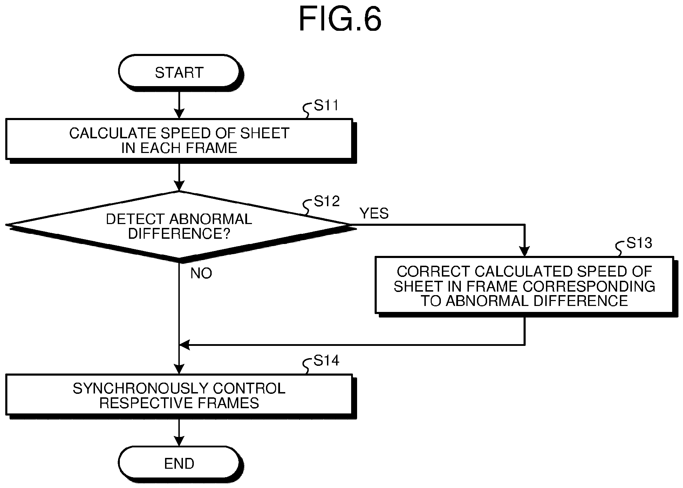

FIG. 6 is a flowchart illustrating an example of processing (measurement method) executed in the measurement system. Since the specific processing has been described above, the detailed description will be omitted.

In Step S11, the speed of the sheet in each frame is calculated. This processing is similar to the processing in Step S1 in FIG. 3 described above.

In Step S12, it is determined whether or not an abnormal difference has been detected. In a case where there is an abnormal difference between the calculated speeds V of the sheet 9 in the frames 1 calculated in Step S11 described above, the detector 43 of the synchronization control unit 4 detects the abnormal difference. In a case where the abnormal difference is detected (Step S12: Yes), the processing proceeds to Step S13. Otherwise (Step S12: No), the processing proceeds to Step S14.

In Step S13, the calculated speed of the sheet in the frame corresponding to the abnormal difference is corrected. The speed corrector 44 of the synchronization control unit 4 corrects the calculated speed V of the sheet 9 in the frame 1 corresponding to the abnormal difference on the basis of the calculated speeds V of the sheet 9 in the other frames 1 or the representative speed. Thereafter, the processing proceeds to Step S14.

In Step S14, the respective frames are synchronously controlled. This processing is similar to the processing in Step S2 in FIG. 3 described above.

<Modification Examples>

The disclosed technology is not limited to the above embodiments. Several modification examples will be described.

In the above embodiments, the case where the synchronization control unit 4 acquires the encoder signal ES from each roller 2 arranged near each frame 1 has been described as an example. However, such acquisition of the encoder signal ES is not essential. For example, the speed of the sheet 9 in each frame 1 (corresponding to the calculated speed V) may be manually input by the operator or the like at the operator station 3 and transmitted to the synchronization control unit 4. The speed of the sheet 9 may be input using not only the absolute value of the speed but also the speed of the sheet 9 in another frame 1, a speed difference from a predetermined reference speed, a speed ratio, and the like. Since the speed and the extension of the sheet vary depending on the brand (the material, the measurement range, and the like), the speed may be set and managed for each brand.

In the above embodiments, the case where the thickness of the sheet 9 is measured by the measurement system 100 has been described as an example. However, not only the thickness of the sheet 9 but also various factors related to the sheet 9, such as basis weight and weight, may be measured by the measurement system 100.

In the above embodiments, the case where the frame 1 has a ring shape as illustrated in FIG. 2 and scans and measures the sheet 9 passing through the inside has been described as an example. Not only such a configuration but also any measurement means capable of scanning and measuring the sheet 9 may be used as the frame 1 in the present disclosure.

The technology described above is specified as follows, for example. One of the disclosed technologies is the measurement system 100. As described with reference to FIG. 1 and the like, the measurement system 100 includes the plurality of frames 1 each of which scans and measures the sheet 9 being conveyed, and the synchronization control unit 4 which synchronously controls each of the frames 1. The synchronization control unit 4 includes the speed calculator 41 which calculates the calculated speed of the sheet 9 in each of the frames 1, and the controller 42 which controls each of the frames 1 so that each of the frames 1 scans and measures the same position of the sheet 9 on the basis of the calculated speed V of the sheet 9 in each of the frames 1 calculated by the speed calculator 41.

According to the measurement system 100 described above, even in a case where the calculated speeds V in the respective frames 1 are different due to, for example, the extension of the sheet 9 being conveyed, the frames 1 are controlled so that the frames 1 scan and measure the same position of the sheet 9 on the basis of the calculated speeds V of the sheet 9 in the frames 1. Accordingly, it is possible to reduce lowering of accuracy of synchronization control for the plurality of frames 1.

As described with reference to FIG. 1, Equation 1, and the like, the plurality of frames 1 may include the former frame 1 and the latter frame 1 arranged in order in the conveying direction of the sheet 9, and the controller 42 may calculate the delay time T of scanning of the latter frame 1 with respect to scanning of the former frame 1 on the basis of the path length L between the former frame 1 and the latter frame 1, the calculated speed V of the sheet 9 in the former frame 1, and the calculated speed V of the sheet 9 in the latter frame 1, and control scanning timing of the latter frame 1 on the basis of the delay time T calculated. The controller 42 may calculate the delay time T by dividing the path length L by the average speed of the calculated speed V of the sheet 9 in the former frame 1 and the calculated speed V of the sheet 9 in the latter frame 1. For example, by calculating the delay time T in this manner, the respective frames 1 can be synchronously controlled.

As described with reference to FIG. 4 and the like, the synchronization control unit 4 may include the detector 43 which detects the abnormal difference between the calculated speeds V of the sheet 9 in the frames 1 calculated by the speed calculator 41, and the speed corrector 44 which corrects the calculated speed V of the sheet 9 in the frame 1 corresponding to the abnormal difference detected by the detector 43 out of the calculated speeds V of the sheet 9 in the frames 1 calculated by the speed calculator 41. With this configuration, for example, even in a case where slippage of the sheet 9 being conveyed occurs and the calculated speed V of the sheet 9 in a certain frame 1 is different from the actual speed of the sheet 9, the respective frames 1 can be synchronously controlled.

As described with reference to FIG. 4, Equation 2, and the like, the speed corrector 44 may correct the calculated speed V of the sheet 9 in the frame 1 corresponding to the abnormal difference on the basis of the calculated speed V of the sheet 9 in another frame 1. For example, the speed corrector 44 may correct the calculated speed V of the sheet 9 in the frame 1 corresponding to the abnormal difference on the basis of the path length L between the frame 1 corresponding to the abnormal difference and another frame 1 and the calculated speed V of the sheet 9 in the other frame 1. For example, in this manner, the calculated speed V of the sheet 9 in the frame 1 corresponding to the abnormal difference can be corrected.

The speed calculator 41 may calculate the speed V of the sheet 9 in each of the frames 1 on the basis of the encoder signal ES from the encoder of the roller 2 disposed near each of the frames 1 and constituting a conveying means of the sheet 9. For example, in this manner, the calculated speed V of the sheet 9 in each of the frames 1 can be calculated.

The measurement method described with reference to FIGS. 3, 6, and the like is also one of the disclosed technologies. The measurement method is a measurement method using the plurality of frames 1 each of which scans and measures the sheet 9 being conveyed, and includes calculating the speed of the sheet 9 in each of the frames 1 (Step S1 or Step S11), and controlling each of the frames 1 so that each of the frames 1 scans and measures the same position of the sheet 9 on the basis of the calculated speed of the sheet 9 in each of the frames 1 calculated (Step S2 or Step S14). With such a measurement method as well, as described above, it is possible to reduce lowering of accuracy of synchronization control for the plurality of frames 1.

Reference Signs List

100    MEASUREMENT SYSTEM
1      FRAME
11     SENSOR HEAD
12     SENSOR HEAD
2      ROLLER
3      OPERATOR STATION
4      SYNCHRONIZATION CONTROL UNIT
41     SPEED CALCULATOR
42     CONTROLLER
43     DETECTOR
44     SPEED CORRECTOR
9      SHEET
9P     SCANNED POSITION

**Claims**

1. A measurement system comprising:

   a plurality of frames each of which scans and measures a sheet being conveyed; and
   a synchronization control unit which synchronously controls each of the frames,
   wherein the synchronization control unit includes
   a speed calculator which calculates a speed of the sheet in each of the frames, and
   a controller which controls each of the frames so that each of the frames scans and measures an equal position of the sheet on a basis of a calculated speed of the sheet in each of the frames calculated by the speed calculator.

2. The measurement system according to claim 1, wherein the plurality of frames include a former frame and a latter frame arranged in order in a conveying direction of the sheet, and
   wherein the controller calculates delay time of scanning of the latter frame with respect to scanning of the former frame on a basis of a path length between the former frame and the latter frame, the calculated speed of the sheet in the former frame, and the calculated speed of the sheet in the latter frame, and controls scanning timing of the latter frame on a basis of the delay time calculated.

3. The measurement system according to claim 2, wherein the controller calculates the delay time by dividing the path length by an average speed of the calculated speed of the sheet in the former frame and the calculated speed of the sheet in the latter frame.

4. The measurement system according to any one of claims 1 to 3, wherein the synchronization control unit includes

   a detector which detects an abnormal difference between the calculated speeds of the sheet in the frames calculated by the speed calculator, and
   a speed corrector which corrects the calculated speed of the sheet in the frame corresponding to the abnormal difference detected by the detector out of the calculated speeds of the sheet in the frames calculated by the speed calculator.

5. The measurement system according to claim 4, wherein the speed corrector corrects the calculated speed of the sheet in the frame corresponding to the abnormal difference on a basis of the calculated speed of the sheet in a different frame.

6. The measurement system according to claim 5, wherein the speed corrector corrects the calculated speed of the sheet in the frame corresponding to the abnormal difference on a basis of the path length between the frame corresponding to the abnormal difference and a different frame and the calculated speed of the sheet in the different frame.

7. The measurement system according to any one of claims 1 to 6, wherein the speed calculator calculates the speed of the sheet in each of the frames on a basis of an encoder signal from an encoder of a roller disposed near each of the frames and constituting a conveying means of the sheet.

8. A measurement method using a plurality of frames each of which scans and measures a sheet being conveyed, the measurement method comprising:

calculating a speed of the sheet in each of the frames; and
controlling each of the frames so that each of the frames scans and measures an equal position of the sheet on a basis of a calculated speed of the sheet in each of the frames calculated.

# FIG.1

EP 4 502 621 A1

# FIG.2

# FIG.3

```
        ┌─────────────┐
        │    START    │
        └──────┬──────┘
               │
               ▼                          ⌐S1
  ┌──────────────────────────────────┐
  │   CALCULATE SPEED OF SHEET        │
  │         IN EACH FRAME             │
  └──────────────┬───────────────────┘
                 │
                 ▼                        ⌐S2
  ┌──────────────────────────────────┐
  │   SYNCHRONOUSLY CONTROL           │
  │      RESPECTIVE FRAMES            │
  └──────────────┬───────────────────┘
                 │
                 ▼
        ┌─────────────┐
        │     END     │
        └─────────────┘
```

# FIG.4

```
                                              4
  ┌─────────────────────────────────────┐
  │  SYNCHRONIZATION                     │
  │  CONTROL UNIT                        │
  │                              41      │
  │  ┌──────────────────────────┐        │
  │  │        SPEED             │        │
  │  │     CALCULATOR           │        │
  │  └──────────────────────────┘        │
  │                              42      │
  │  ┌──────────────────────────┐        │
  │  │      CONTROLLER          │        │
  │  └──────────────────────────┘        │
  │                              43      │
  │  ┌──────────────────────────┐        │
  │  │       DETECTOR           │        │
  │  └──────────────────────────┘        │
  │                              44      │
  │  ┌──────────────────────────┐        │
  │  │        SPEED             │        │
  │  │     CORRECTOR            │        │
  │  └──────────────────────────┘        │
  └─────────────────────────────────────┘
```

# FIG.5

# FIG.6

```
           ┌─────────────┐
           │    START    │
           └──────┬──────┘
                  │           ╭S11
        ┌─────────▼─────────────┐
        │  CALCULATE SPEED OF SHEET │
        │      IN EACH FRAME        │
        └─────────┬─────────────┘
                  │                  ╭S12      YES
              ◇───▼──────────────◇───────────────────┐
              │ DETECT ABNORMAL  │                   │
              │   DIFFERENCE?    │                   │
              ◇──────────────────◇          ╭S13     │
                  │ NO              ┌─────────▼──────────────┐
                  │                 │ CORRECT CALCULATED SPEED OF │
                  │                 │ SHEET IN FRAME CORRESPONDING │
                  │                 │   TO ABNORMAL DIFFERENCE    │
                  │                 └─────────┬──────────────┘
                  │◄──────────────────────────┘
                  │            ╭S14
        ┌─────────▼─────────────┐
        │ SYNCHRONOUSLY CONTROL  │
        │   RESPECTIVE FRAMES    │
        └─────────┬─────────────┘
                  │
           ┌──────▼──────┐
           │     END     │
           └─────────────┘
```

## INTERNATIONAL SEARCH REPORT

| International application No. |
| --- |
| **PCT/JP2023/011098** |

**A. CLASSIFICATION OF SUBJECT MATTER**

*G01P 13/00*(2006.01)i; *G01B 15/02*(2006.01)i
FI:　G01B15/02 A; G01P13/00 E

According to International Patent Classification (IPC) or to both national classification and IPC

**B. FIELDS SEARCHED**

Minimum documentation searched (classification system followed by classification symbols)

　　G01P13/00; G01B15/02

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 7-204565 A (YOKOGAWA ELECTRIC CORP) 08 August 1995 (1995-08-08) paragraphs [0001], [0010], [0015] | 1, 8 |
| Y | paragraphs [0001], [0010], [0015] | 7 |
| A | paragraphs [0001], [0010], [0015] | 2-6 |
| Y | JP 2009-184309 A (RISO KAGAKU CORP) 20 August 2009 (2009-08-20) paragraph [0004] | 7 |
| A | paragraph [0024] | 4-6 |
| A | CN 103878101 A (BOSCH GMBH ROBERT) 25 June 2014 (2014-06-25) entire text, all drawings | 1-8 |
| A | JP 2014-224763 A (SUMITOMO CHEMICAL CO) 04 December 2014 (2014-12-04) entire text, all drawings | 1-8 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 May 2023** | **23 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/011098**

| Patent document cited in search report | | | Publication date (day/month/year) | Patent family member(s) | Publication date (day/month/year) |
|---|---|---|---|---|---|
| JP | 7-204565 | A | 08 August 1995 | (Family: none) | |
| JP | 2009-184309 | A | 20 August 2009 | (Family: none) | |
| CN | 103878101 | A | 25 June 2014 | DE 102012224228 A<br>entire text, all drawings | |
| JP | 2014-224763 | A | 04 December 2014 | (Family: none) | |

Form PCT/ISA/210 (patent family annex) (January 2015)

**REFERENCES CITED IN THE DESCRIPTION**

**Patent documents cited in the description**

- JP 7204565 A